# EUROPEAN PATENT APPLICATION

(11) **EP 1 936 287 A2**
(43) Date of publication of application: **25.06.2008**
(21) Application number: 07023511.4
(22) Date of filing: 05.12.2007
(51) Int. Cl.: F24D 12/02, F24H 1/43, F24H 8/00

(54) **Combustion unit for heat generator to which an additional heat generator is connected**

(30) Priority: 22.12.2006 IT AN20060075
(71) Applicant: MERLONI TERMOSANITARI S.p.A., 60044 Fabriano (Ancona) (IT)
(72) Inventor: De Sanctis, Guido, 60044 Fabriano (AN) (IT)
(74) Representative: Gentili, Enrico

(57) **Abstract**

The present invention relates to a combustion unit (1) for a primary heat generator (GT), to which a secondary generator comprising a primary generator (GT), a burner (101), a flue gas pipe (102) for the entry of combustion products from the secondary generator, a connection pipe (103) that conveys the second heat generator combustion products to said flue gas pipe (102) and a fuel-oxidizing agent mixture supply pipe (104) for combustion in said cylindrical burner (101) is connected.

The cylindrical burner (101) and the flue gas pipe (102) are coaxially arranged and one placed preferably inside the other so that the flue gases they emit go through the heat exchanger (2) starting in the same part, that is, from the bottom or the top of said heat exchanger (2).

The present invention also relates to various types of heat generator (GT) using this combustion unit (1).

## Description

The present invention relates to a fuel generator such as a boiler for space and/or domestic water heating, hereinafter referred to as a primary generator, to which a secondary generator which is also a fuel generator is connected where this secondary generator may be a thermoelectric cogenerator such as a Stirling motor or a fuel cell. More specifically, the present invention relates to simple means of conveying the flue gases of said secondary generator in order to transfer heat to the heat exchanger of said primary generator.

Indeed, the use of fuel heat generator heat exchangers is useful for the heat absorption of combustion products of a thermoelectric generator so that there is only one thermal carrier fluid heating system.

It is clear that the primary generator should preferably be a condensing type and condense the water vapour in the combustion products for optimum efficiency.

Systems in which the combustion products of a thermoelectric cogenerator are cooled in the heat exchangers of a primary generator together with its combustion products are already known.

Document WO 01/90656 shows a primary generator comprising a primary burner and a heat exchanger to which a secondary generator comprising a second burner is connected. An exhaust pipe conveys the combustion products of the second burner to the space where the primary burner is located. In this case, the heat exchanger is traversed by the combustion products, hereinafter referred to as flue gases, generated by both the first and the second burners which are mixed together from the start of heat exchange in the primary generator combustion chamber.

However, there are several reasons why the flue gases of the secondary generator pass through the exchanger further downstream than those produced by the primary generator. In particular, the flue gases of the secondary generator are usually generated at a lower temperature than those generated by the primary generator and/or in any case, reach it at a lower temperature. It is therefore advantageous for the flue gases of the secondary generator to be mixed with those of the primary generator when the latter have been cooled to the temperature of the former.

A proposal of this type has been made in document GB 2 375 590 where the supply pipe of the flue gases produced by a thermoelectric cogenerator is placed inside the heat exchanger of the primary generator in an intermediate area and orthogonally to the main axis of the primary generator.

Obviously, the entry of secondary generator flue gases in an intermediate area of said heat exchanger results in design complications or, at the very least, makes the architecture of the primary generator specific to connection with a secondary generator.

Additionally, lateral inlet of the secondary generator flue gases may disturb the flow of flue gases produced by the primary generator which are cooled in the heat exchanger since it is traversed by a second direct flow which is substantially orthogonal to it.

To eliminate the aforementioned limits, at least in part, a first aim of the present invention is to create simple means of conveying the flue gases of said secondary generator into the heat exchanger of said primary generator, preferably condensing, for a primary generator which is preferably condensing connected to a secondary generator.

Another aim of the present invention is to indicate simple means so that the flue gases produced by the primary generator and the secondary generator are mixed in an area in which said flue gases have separately reached substantially the same temperature.

Another aim of the present invention is to develop several variations in the way said flue gases of the primary and secondary generator join together as well as several variations of the primary generator, for example condensing or otherwise, with the combustion chamber at the top or the bottom, without having to modify the basic architecture of the primary generator substantially.

Another aim of the present invention is to create a primary generator whose basic architecture, or at least that of its heat exchanger, is not substantially modified when a secondary generator is connected to it.

These and further aims and advantages can be obtained using a combustion unit as described below with the aid of illustrations in some of the preferred embodiments and in the enclosed claims which are an integral part of the description.
Figure 1 shows a vertical section of the basic parts of a primary generator to which a secondary generator is connected in accordance with a first embodiment of the present invention.
Figure 2 shows a vertical section of the basic parts of a primary generator to which a secondary generator is connected in accordance with a second embodiment of the present invention.
Figure 3 shows a section of the means of flue gas inlet along the line A-A in Figure 1.
Figure 4 shows a vertical section of the basic parts of a primary generator with an architecture that is suitable for condensation to which a secondary generator is connected in accordance with a third embodiment of the present invention.
Figure 5 shows a vertical section of the basic parts of a primary generator with an architecture that is suitable for condensation to which a secondary generator is connected in accordance with a fourth embodiment of the present invention.
Figure 6 shows a schematic diagram of some of the possible set-ups of a primary generator without making substantial modifications to its basic architecture provided that the means of the invention are used.

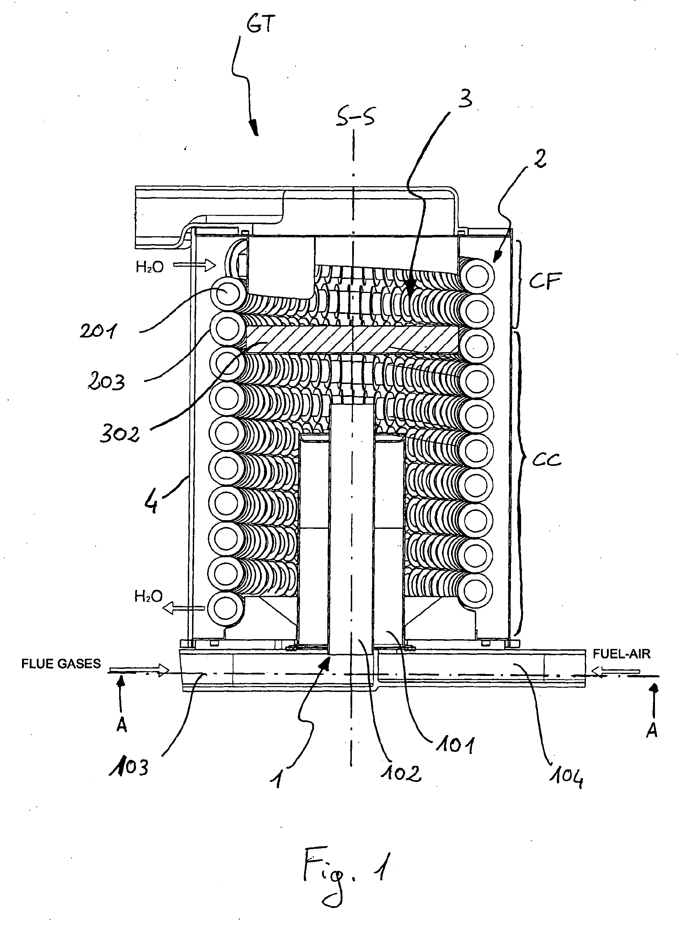

Figures 1 to 5 show a combustion unit 1 for a primary generator GT connected to a secondary generator in accordance with some embodiments of the invention.

In all the embodiments described below, without this being considered restrictive, a helical heat exchanger 2 is shown since it is a preferred embodiment with a finned tube 201 which is spirally wound to form an appropriate number of coils 203. Said heat exchanger 2 contains internally a volume 3 which may be divided into several chambers and is surrounded by a mantle 4. '

The advantages and characteristics of the helical heat exchangers which possess an architecture which is essentially symmetrical with respect to a vertical central axis are already known: refer, for example, to documents IT 1 153 429 and FR 2 274 876.

Although it is not shown in the figures, there is a second heat generator (a thermoelectric cogenerator, for example, as already mentioned) whose combustion products are cooled using the heat exchanger 2 of the primary generator GT.

In addition to the burner 101 of the primary generator GT, said combustion unit 1 also has a gas flue pipe 102 through which the combustion products from the secondary generator can be introduced into the primary generator GT connected to it so that the fuel mixture directed towards the burner 101 and the combustion products of the secondary generator can enter the primary generator GT through a single opening.

Said burner 101 and said gas flue pipe 102 extend within the primary generator GT with main axes that are substantially parallel to each other and preferably form a single body.

In a more advantageous embodiment of the invention, said burner 101 and gas flue pipe 102 are coaxial and one of the two is placed inside the other.

103 indicates the connection pipe that conveys the flue gases from the secondary generator to the gas flue pipe 102 whereas 104 indicates the fuel mixture supply pipe in burner 101.

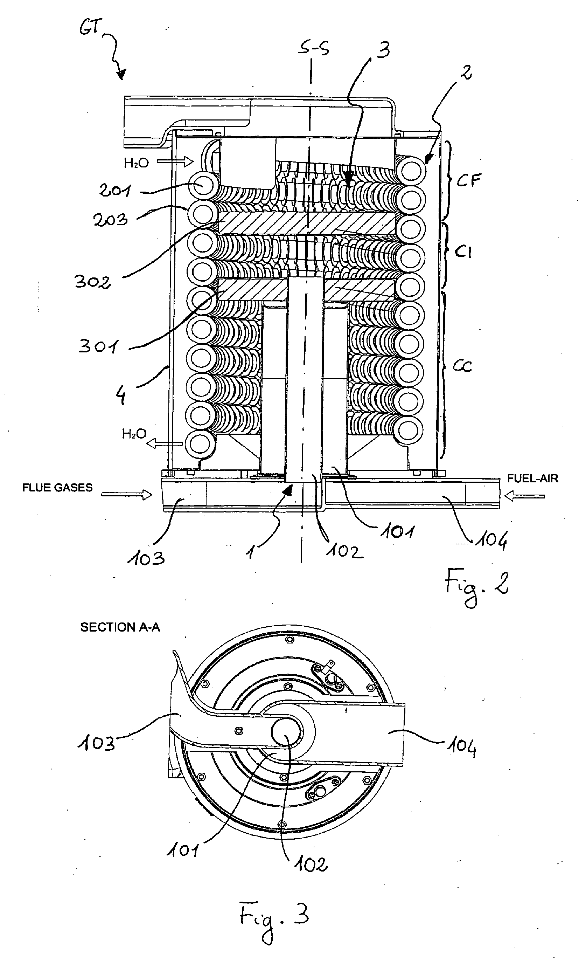

With reference to figures 1 and 2, said combustion unit 1 extends inside volume 3 surrounded by heat exchanger 2 from the bottom of the primary generator GT and is executed in an embodiment in which the flue gas pipe 102 passes through the burner 101 (refer to Figure 3).

Figures 1 and 2 both shown the combustion chamber CC in which the burner 101 is housed.

According to the embodiment in Figure 1, the flue gas pipe 102 leads to the combustion chamber CC so that the flue gases from the secondary generator are immediately mixed with the flue gases produced by the burner 101.

According to the embodiment shown in Figure 2, a main partition 301 is positioned inside volume 3. Said main partition 301 separates the combustion chamber CC from another chamber, hereinafter referred to as the intermediate chamber CI, which the flue gases from the secondary generator flow into instead of combustion chamber CC so that the gases are not mixed with the flue gases produced by the burner before they have transferred part of their heat to the heat exchanger 2.

Figures 1 and 2 both show another possible second partition 302 through which in the highest part of volume 3, another chamber, hereinafter referred to as final chamber CF, can be sectioned off in which both the flue gases of the secondary generator and those produced by the burner 101 circulate, mixed between them, before being discharged in the flue. In Figure 2, this secondary partition 302 separates said final chamber CF from said intermediate chamber CI and there are three chambers in all, combustion CC, intermediate CI and final CF respectively. This secondary partition 302 should preferably be placed so that the flue gases from the combustion CC and intermediate CI chambers enter it once they have substantially reached the same temperature. In other words, the parts of the heat exchanger 2 exposed to the flue gases circulating in the combustion CC and intermediate CI chambers have surfaces that are essentially capable of cooling said flue gases to the same temperature.

Said main partitions 301 and secondary partitions 302 are made of material that is resistant to the environmental conditions of the combustion CC, intermediate CI and final CF chambers and, where appropriate, material that is also diathermic.

The presence of the final chamber CF is due to the possible modalities of circulation of the flue gases connected with a special helical heat exchanger 2 used in the figures.

In both figures 1 and 2, the combustion chamber CC and the intermediate CI and final CF chambers, if present, are arranged in sequence from bottom to top and flue gases that gradually become colder from the bottom to the top circulate in them. The water to be heated circulates, on the other hand, as indicated by the arrows, from the top to the bottom to create a counter-current heat exchanger.

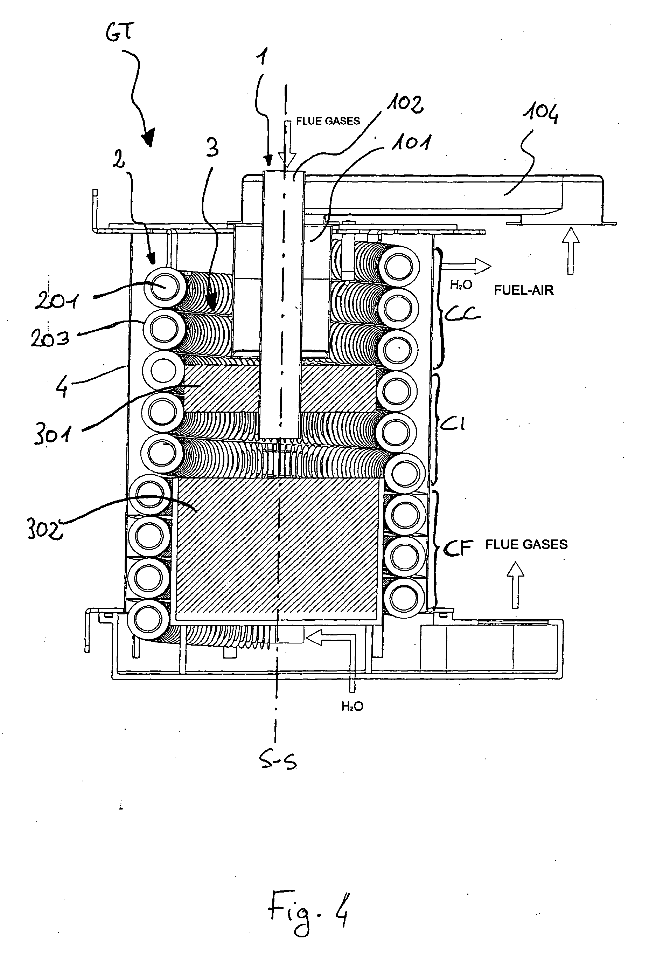

According to the embodiment shown in Figure 4, the combustion unit 1 extends towards the volume 3 of the top of the primary generator GT.

Volume 3 is divided from the top to the bottom into three chambers: combustion CC in which flue gases from the burner 101 are generated, intermediate CI to which the flue gases from the secondary generator are conveyed by way of the flue gas pipe 102 and final CF in which said flue gases are mixed after they have separately substantially reached the same temperature. The water, on the other hand, runs through heat exchanger 2 from the bottom to the top to create another counter-current heat exchanger.

The embodiment in Figure 4 is appropriate if the primary generator GT is a condensing generator in which the condensation produced is dragged towards the bottom part of the heat exchanger 2 by the flue gases that flow downwards.

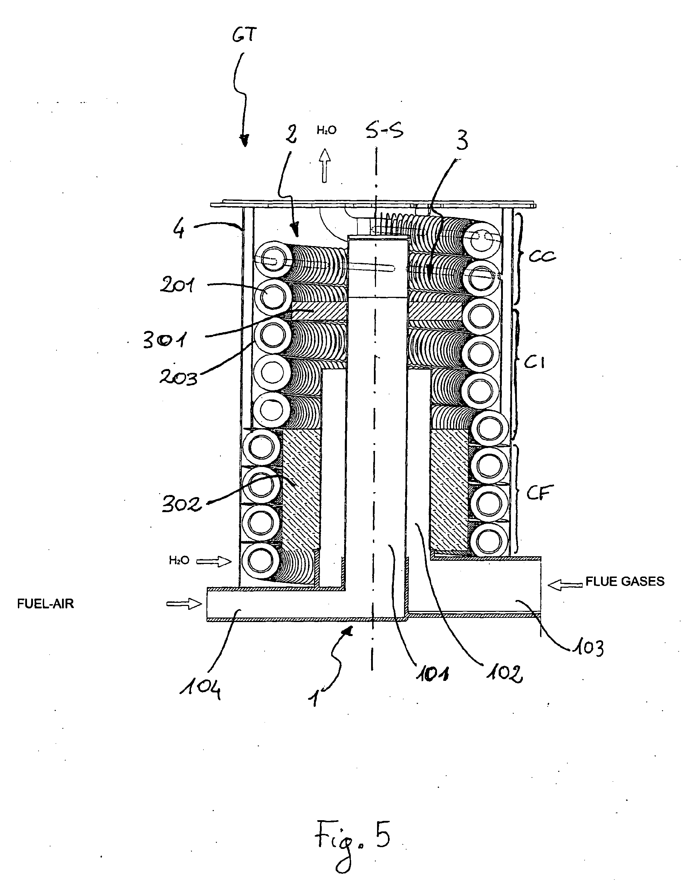

The same modality of counter-current heat exchange with dragging down of the condensation by the down flow of flue gases can be achieved as shown in Fig. 5 with a combustion unit 1 which extends from the bottom of the primary generator GT towards the inside of volume 3 where, unlike the previous examples, the burner 101 is inside the flue gas pipe 102 and extends towards the combustion chamber CC placed at the top of volume 3 whereas the flue gas pipe 102 is cut halfway along to discharge the secondary generator flue gases in the intermediate chamber CI and the final chamber CF, if present, is always placed at the bottom.

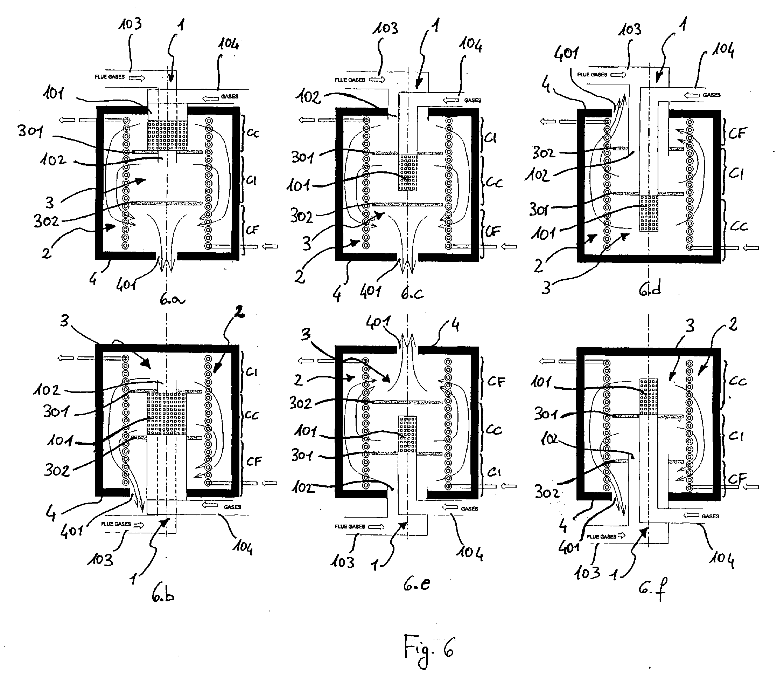

With reference to the diagrams, which are not detailed, of Figure 6 (where diagram 6.a is the same as Fig. 4 and, when inverted, the same as Fig. 2 whereas diagram 6.f is the same as Fig. 5), by combining the following possibilities:
- constructing the combustion unit 1 with flue gas pipe 102 inside or outside the burner 101
- placing said combustion group 1 in the bottom or top part of the primary generator GT
- obtaining the entry of secondary generator flue gases in the combustion chamber CC or in a separate chamber CI
different types of heat generators GT can be obtained, both condensing and otherwise, with the combustion CC, intermediate CI and final CF chambers placed in a different order of sequence up to the flue gas discharge from the opening 401 without making substantial changes to its basic architecture even between models that include connection to a secondary generator or not in order to simplify the processes and production equipment considerably because with the combustion unit 1 the following is possible:
- placing both the burner 101 and the flue gas pipe 102 in the primary generator GT through a single opening
- but placing the burner 101 and the flue gas pipe 102 separately in the most appropriate position for each model.

It can be seen that generally there is no link between the side of the primary generator GT where the combustion unit 1 is introduced and the side where the combustion products are discharged; in other words, depending on the execution methods of the combustion unit 1, the flue gases can be discharged from a side which is not the one where the combustion unit 1 was introduced or from the same side (compare diagrams 6.a and 6.b).

It can also be seen that, by virtue of the partitions 301 and 302, the combustion CC, intermediate CI and final CF chambers can be placed in a different order of sequence (compare diagrams 6.b and 6.c with the other four).

It is clear that numerous embodiments of the combustion unit 1, object of the present invention, can be devised by those skilled in art without departing from the scope and spirit of the invention and it is also clear that in the practical implementation of the invention, the various components previously described may be replaced by elements that are technically equivalent.

For example, in the embodiments shown in Figures 1 to 5, the burner 101 is preferably a cylindrical burner 101 with radial flames which are substantially orthogonal to the S-S axis of the combustion unit 1. This is not a limit because even if the flue gas pipe 102 runs inside it as in Figure 5, burners 101 with head flames can be used which are substantially parallel to said S-S axis or other different shapes and alternatives.

In the same way, the flue gas pipe 102 shown in the figures has a head discharge which is substantially parallel to said S-S axis although it could equally occur also or only radially through openings on its side.

Finally, as an example of second heat generators only thermoelectric generators have been mentioned as already used in the known state of the art but they may also consist of other heat engines such as absorption or compressor refrigerating systems (such as heat pumps) driven by an internal combustion engine.

The present invention is useful for any type of primary generator GT to which a secondary generator is connected although the preferred embodiments foresee its use in primary generators GT that use helical heat exchangers 2 with both a primary generator GT and combustion unit 1 which are substantially symmetrical to their central axis and in particular with said central axes coinciding with one another.

## Claims

1. Combustion unit (1) including a burner (101) for heat generator (GT)
where to said heat generator (GT)
- a secondary generator is connected whose combustion products are at least partly cooled by the heat exchanger (2) of said heat generator (GT) which acts as a primary generator (GT)
and where said primary generator (GT) comprises
- an internal volume (3) of which at least a part acts as a combustion chamber (CC) and in which the combustion products that must be cooled by said heat exchanger circulate (2),
- a flue gas pipe (102) for the entry of secondary generator combustion products in said internal volume (3),
**characterized in that**
said flue gas pipe (102) and said burner (101)
- are connected to each other
- have their respective main axes substantially parallel to each other
- and enter said primary generator (GT) through a single opening.

2. Combustion unit (1) as in the previous claim
**characterized in that**
said flue gas pipe (102) and said burner (101) form a single body.

3. Combustion unit (1) as in the previous claim
**characterized in that**
said flue gas pipe (102) and said burner (101) are coaxially arranged and one inserted in the other.

4. Combustion unit (1) as in the previous claim
**characterized in that**
said flue gas pipe (102) passes through said cylindrical burner (101).

5. Combustion unit (1) as in claim 3
**characterized in that**
said burner (101) passes through said flue gas pipe (102).

6. Combustion unit (1) as in any previous claim
**characterized in that**
said flue gas pipe (102) discharges the combustion products of the secondary generator in the combustion chamber (CC) in which said burner (101) is housed.

7. Combustion unit (1) as in any previous claim excluding claim 6
**characterized in that**
said flue gas pipe (102) discharges the combustion products of the secondary generator in the intermediate chamber (CI) said intermediate chamber (CI) being separated from the combustion chamber (CC) by a main partition (301) which acts as a barrier to the passing of combustion products from one chamber to the other (CC, CI).

8. Combustion unit (1) as in the previous claim
**characterized in that**
said combustion products of the secondary generator can be mixed with the combustion products generated by the burner (101) only after said combustion products have substantially reached the same temperature.

9. Combustion unit (1) as in any previous claim
**characterized in that**
another final chamber (CF) is provided through which the combustion products of the secondary generator and those generated by the burner (101) circulate, mixed between them, for additional cooling before they are discharged to the flue.

10. Combustion unit (1) as in the previous claim
**characterized in that**
said final chamber (CF) is separated from said combustion (CC) and/or intermediate (CI) chamber by a secondary partition (302).

11. Combustion unit (1) as in one or more of the previous claims
**characterized in that**
said burner (101) is a cylindrical burner (101).

12. Combustion unit (1) as in one or more of the previous claims except claim 11,
**characterized in that**
said burner (101) is a head burner (101).

13. Combustion unit (1) as in one or more of the previous claims
**characterized in that**
said flue gas pipe (102) has a head discharge.

14. Combustion unit (1) as in one or more of the previous claims except claim 13,
**characterized in that**
said flue gas pipe (102) has a radial discharge.

15. Heat generator (GT) using a combustion unit (1) as in one or more of the previous claims.

16. Heat generator (GT) as in the previous claim
**characterized in that**
it is shaped in such a way that the combustion products exit from the same side as where they entered.

17. Heat generator (GT) as in claim 15 at least,
**characterized in that**
said combustion (CC), intermediate (CI) and final (CF) chambers can be placed in any order of sequence.

18. Heat generator (GT) as in claim 15 at least
**characterized in that**:
it is a condensing type.

19. Heat generator (GT) as in claim 15 at least,
**characterized in that**
said heat exchanger (2) is helicoidal.

20. Combustion unit (1) as in the previous claim,
**characterized in that**
it has a main axis (S-S) which extends parallel to the helicoidal heat exchanger (2) axis.

21. Heat generator (GT) as in claim 15 at least,
**characterized in that**
the flow of combustion products moves substantially vertically and the combustion unit (1) axis (S-S) also has a substantially vertical orientation.

22. Heat generator (GT) as in claim 15 at least
**characterized in that**
said second heat generator is a thermoelectric generator

23. Heat generator (GT) as in claim 15 at least excluding claim 21
**characterized in that**
said second heat generator is an absorption or compressor refrigerating system or heat pump driven by an internal combustion engine.
